Europäisches Patentamt

European Patent Office

Office européen des brevets

(11) Publication number: **0 187 428**
**A1**

## (12) EUROPEAN PATENT APPLICATION

(21) Application number: **85300091.7**

(22) Date of filing: **07.01.85**

(51) Int. Cl.⁴: **F 16 H 21/40**
**//B28D5/04**

(43) Date of publication of application:
**16.07.86 Bulletin 86/29**

(84) Designated Contracting States:
**CH DE FR GB LI NL**

(71) Applicant: **YASUNAGA ENGINEERING KABUSHIKI KAISHA**
**3860 Midorigaokanakamachi**
**Ueno City Mie Prefecture(JP)**

(72) Inventor: **Shimizu, Hiroshi**
**23-6, Minamiyukigaya 4-chome**
**Ohta-ku Tokyo(JP)**

(74) Representative: **Funge, Harry et al,**
**M'CAW & CO. 41-51 Royal Exchange Cross Street**
**Manchester M2 7BD(GB)**

(54) **Mechanism for generating reciprocal rotary motion.**

(57) A compact mechanism is provided for converting angular movement of a crank arm (2) to be driven by a prime mover into reciprocal rotary motion of an output shaft (5). The free end of the crank arm (2) is pivotally connected to one end of a rack (4). A pinion (6) fixedly mounted on the output shaft (5) is meshingly engaged with said rack (4). A rocking arm (8) is mounted on said output shaft (5) for rotation therewith so that the other end thereof having a flange (9) or roller may slide along the back surface of said rack (4). This mechanism may generate smooth and stable torque at the output shaft (5).

Fig. 4

(EP15206M)
(4.1.85)                          - 1 -

## MECHANISM FOR GENERATING RECIPROCAL ROTARY MOTION

This invention relates generally to a mechanism for generating reciprocal rotary motion, and more particularly to such a mechanism for converting a rotational motion in one direction, of a crank arm driven by a prime mover, to reciprocal rotary motion.

The mechanism for generating reciprocal rotary motion is necessitated in various mechanical devices.  As one example, a wire saw may be taken into consideration.

As well known to those skilled in the art, a wire saw in general comprises a feeding reel, a take-up reel, a set of three guide rollers arranged in parallel with one another and in such a way that central axes thereof respectively lie on the three apices of an equilateral triangle in a plane transverse to said axes, and a single wire extending from said feeding reel, passing several times around said rollers to form a sawing wire array, and wound up by said take-up reel.  By reciprocally moving said sawing wire array formed at a plane of the third or base side of said equilateral triangle, a work piece engaged with said wire array is cut into the corresponding number of pieces by said reciprocatingly moving wire array in the presence of abrasive particles.  The shaft for directly or indirectly driving any of said rollers must be reciprocatingly rotated.

A typical and well known crank mechanism for generating

(EP15206M)
(4.1.85)

- 2 -

such reciprocal rotary motion comprises a crank journal driven in any one direction by a prime mover, a crank arm fixed on said journal to rotate therewith, a connecting rod having one end thereof pivotally connected to the free end of said crank arm, a rack having one end pivotally connected to the other end of said connecting rod and guided so as to reciprocally move in a straight line, and a pinion meshingly engaged with said rack. Such mechanism is, however, disadvantageous in that the distance between said crank journal and an output shaft of said pinion is inevitably relatively long and consequently necessitates a relatively large space.

An improved known mechanism for avoiding such defect has one end of a rocking arm pivotally connected to the other end of said connecting rod. Said rocking arm is fixed with an output shaft for reciprocal rotary motion. This mechanism is, however, disadvantageous in that there is inevitably caused torque fluctuation at the output shaft which adversely affects for instance the sawing wire movement for cutting, which is explained in more detail later with reference to the accompanying drawings.

An object of the invention is to provide a compact mechanism for converting a rotational motion in one direction of a crank arm driven by a prime mover to reciprocal rotary motion whilst eliminating torque fluctuation in such reciprocal rotary motion of the output shaft.

The invention provides a mechanism comprising a crank journal to be driven in one direction, a crank arm fixed to said crank journal to rotate therewith, a rack pivotally connected at one end thereof to a free end of said crank arm, and a pinion meshingly engaged with said

0187428

rack and having an output shaft connected thereto.

The invention is now explained in more detail with reference to an embodiment illustrated in the accompanying drawings in which:-

Fig. 1          is a schematic side view of the typical known
                mechanism for converting a rotational motion
                to reciprocal rotary motion.

Fig. 2          is a similar view of the known improved
                mechanism,

Fig. 3          is a sketch for explaining undesirable torque
                fluctuation caused by the mechanism of Fig. 2,

Fig. 4          is a schematic side view of the mechanism
                according to the invention,

Fig. 5          is a sketch for explaining operation of the
                mechanism of the invention, and

Fig. 6          is a perspective sketch of a wire saw
                arrangement to which the mechanism of the
                invention is applied.

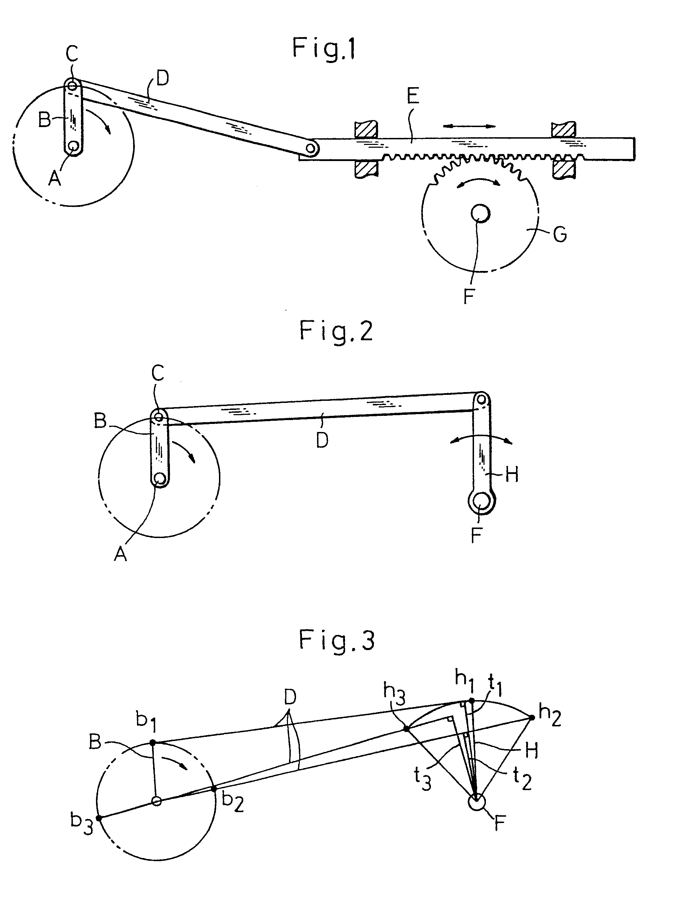

In Fig. 1, the typical mechanism in public knowledge has a crank journal A driven by a prime mover not shown, on which a crank arm B is fixed so as to angularly move in the direction shown by an arrow.   One end of a connecting rod D is pivotally connected to the free end of the crank arm B by means of a crank pin C.   The other end of said connecting rod D is pivotally connected to one end of a rack E so as to guidedly and reciprocally move the latter as shown by an arrow.   A pinion G, meshingly engaged with said rack E, has an output shaft F fixed therewith so as to be reciprocally angularly moved as shown by an arrow.   It will be readily appreciated that such mechanism requires a fairly large space.

(EP15206M)
(4.1.85)                        - 4 -

In Fig. 2, the known improvement has one end of a
rocking arm H pivotally connected to the other end of
the connecting rod D so as to rockingly move as shown
by an arrow.   Thus, the output shaft F fixed at the
other end of said rocking arm H is reciprocally rotated.
This mechanism is more compact than that as illustrated
in Fig. 1 but not satisfactory as regards torque
fluctuation at the output shaft F, as referred to above,
which shall be explained with reference to Fig. 3.

The torque applied by the crank arm B on the output
shaft F is determined by the length of the perpendicular
line from the axis of the output shaft F to the line of
the connecting rod D, which is displaced depending on the
angular movement of the crank arm B.  When the pivoted
end of the crank arm B lies on a point b1 and the pivoted
end of the rocking arm H lies on a point h1, said
perpendicular line is to be represented by t1 in said
Fig. 3.   When the crank arm B is angularly moved so
that said pivoted end thereof lies on a point b2 and said
pivoted end of said rocking arm H lies on a point h2, said
perpendicular line is represented by t2, and when said
ends are moved to points b3 and h3 respectively, the
perpendicular line is represented by t3.   As can be
seen, the lengths of the perpendicular line segments t1, t2
and t3 differ considerably.   Thus, the torque
correspondingly fluctuates.   Said fluctuation is made
larger, as the angle of the angular movement of the
rocking arm H is made larger, readily seen from the
sketch of Fig. 3.

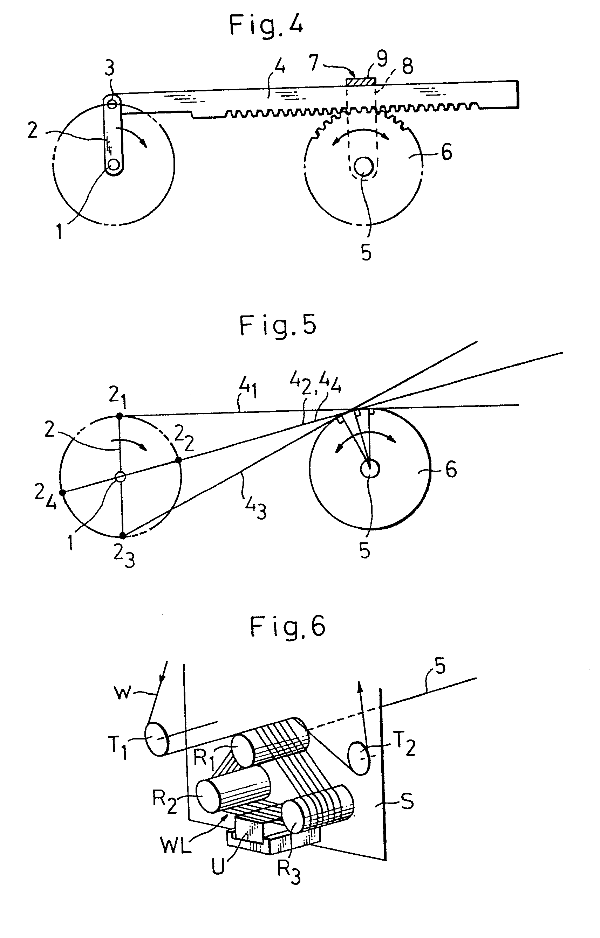

Now with reference to Fig. 4, the arrangement of the
invention is now explained.   On a crank journal 1 driven
by a prime mover (not shown), there is fixedly mounted a
crank arm 2 which is pivotedly connected at the free end

(EP15206M)
(4.1.85) — 5 —

thereof by a crank pin 3 to one end of a rack 4.   On an output shaft 5 there is fixedly mounted a pinion 6 so as to meshingly engage with said rack 4.   There is provided a guide member 7 having an arm 8 which is mounted on said output shaft 5 for angular motion therewith while the outer end has a flange 9 for guiding said rack 4 between the inner side thereof and the toothed section of the pinion 6 so as to ensure meshing engagement of the rack 4 with the pinion 6.

As the crank arm 2 is rotated, the rack 4 is not only moved in the longitudinal direction but also inclined relative to the pinion 6.   Depending on said inclined motion or displacement of the rack 4, said guide flange 9 slides along the rack 4 on the back surface thereof so as to always occupy the position on the rack 4 where the perpendicular line drawn from the centre of the output shaft 5 crosses with the rack 4.   It is preferable to supply lubricant oil under pressure to a recess (not shown) formed in the bottom of said flange 9 so as to press the rack onto the pinion 6 in addition to providing lubrication between said flange 9 and the rack 4.   Said flange 9 may be substituted by a roller mounted on said arm 8 so as to rotatingly slide along the rack 4 on the back surface thereof, and pressing the rack onto the pinion 6 by means of a spring means (not shown) or by forming said roller of an elastomer material.   Owing to such pressing, backlash between the rack 4 and the pinion 6 as well as impact generated at the rack turning at the limit points is eliminated.

In Fig. 5, when the pivoted end of the crank arm 2 lies on positions $2_1$, $2_2$, $2_3$, and $2_4$, the rack 4 is in positions represented by $4_1$, $4_2$, $4_3$ and $4_4$ respectively. Three intersecting points of the perpendicular line with said rack 4 are shown as the positions $4_1$, $4_2$ $(4_4)$ and $4_3$ in Fig. 5. When the crank arm 2 is rotated in the clockwise direction from $2_1$ to $2_2$, the crank rack 4 is pushed to the right in Fig. 5 so as to rotate the pinion 6 and consequently the output shaft 5 in the clockwise direction, but in the course of the further angular movement of the crank arm 2 from $2_2$ to $2_4$, said crank rack 4 is pulled to the left in said figure so as to rotate the output shaft 5 in the counter-clockwise direction. Further angular movement of the crank arm 2 is to cause rotary motion of the output shaft 5 again in the clockwise direction. Wherever the crank arm 2 is positioned in the angular movement thereof, the length of the perpendicular line segment remains constant so as to cause no torque fluctuation on the pinion 6, despite the compactness of this mechanism.

With reference to Fig. 6 a wire saw is shown, to which the mechanism according to the invention may be preferably applied. As referred to above, there are three rollers $R_1$, $R_2$ and $R_3$ so arranged in parallel with one another as to form an equilateral triangle with the axes thereof, and mounted on the machine frame S for rotation. Sawing wire W extends from a feed reel (not shown) through a guide roller $T_1$ to pass around said rollers several times (six times in the figure) so as to form the sawing wire array WL and then is wound up by a take-up reel (not shown) via a guide roller $T_2$. A work piece U to be cut into a number of pieces (seven pieces in the figure) is set under the wire array WL. When said sawing wire array WL is reciprocally moved in the longitudinal direction with relatively pressing said work piece toward said wire array WL in the presence of abrasive particles, said work piece U is cut.

(EP15206M)
(4.1.85)                    - 7 -

In order to drive said wire array for reciprocal motion, one of the rollers $R_1$, $R_2$, $R_3$, is driven by the output shaft 5 of the mechanism according to the invention.

As will be readily appreciated from the above, if said roller $R_1$, for example, is driven by the output shaft such as F in the mechanism illustrated in Fig. 2, the correct cutting can not be attained.

The compact mechanism according to the invention can be applied to various devices necessitating stable torque.

(EP15206M)
(4.1.85)                        - 8 -

Claims:

1.    A mechanism comprising a crank journal to be driven in one direction, a crank arm fixed to said journal to rotate therewith, characterised by a rack (4) pivotally connected at one end thereof to a free end of said crank arm (2) and a pinion (6) meshingly engaged with said rack (4) and having an output shaft (5) connected thereto.

2.    A mechanism according to Claim 1, further characterised by a rocking arm (8) having one end engaged on said output shaft (5) for rotation therewith, the other end thereof being adapted to guide said rack (4) between itself and said pinion (6).

3.    A mechanism according to Claim 2, characterised in that said other end of said rocking arm (8) has a flange (9) operable to engage and slide along a back surface of said rack (4) and to prevent disengagement of the pinion (6) from the rack (4).

4.    A mechanism according to Claim 2, characterised in that said other end of said rocking arm (8) has a roller thereon to rotatingly slide along a back surface of said rack (4) and to prevent disengagement of the pinion (6) from the rack (4).

5.    A wire saw comprising three rollers arranged with their axes disposed in parallel at the apices of an equi-lateral triangle, a sawing wire extending from a feed reel to a take-up reel and passing several times around said rollers,

characterised in that

one of said rollers $(R_1)$ is driven by the output shaft
(5) of a mechanism according to any one of claims 1 to 4.

## Fig.1

## Fig.2

## Fig.3

Fig.4

Fig.5

Fig.6

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| X | WERKSTATT UND BETRIEB, vol. 89, no. 2, 1956, pages 67-68; W. MEYER ZUR CAPELLEN: "Der einfache Zahnstangen-Kurbeltrieb und das entsprechende Bandgetriebe" * Pages 67-68; figures 1,4,5 * | 1-3 | F 16 H 21/40 // B 28 D 5/04 |
| A | GB-A-2 093 561 (RIV-SKF OFFICINE Di VILLAR) * Page 1, lines 41-53; figures 1,3-5 * | 4 | |
| A | FR-A-2 255 987 (YASUNAGA ENGINEERING K.K.) * Page 7, lines 11-18; figure 1 * | 5 | |
| A | US-A-3 824 982 (BOWMAN) * Column 3, lines 40-49; figure 1 * | 5 | TECHNICAL FIELDS SEARCHED (Int. Cl 4) |
| A | GB-A-2 113 797 (DOWTY ROTOL LTD.) * Figures * | 1-4 | F 16 H B 28 D |

The present search report has been drawn up for all claims

| Place of search | Date of completion of the search | Examiner |
|---|---|---|
| THE HAGUE | 19-08-1985 | MENDE H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82